# EUROPÄISCHE PATENTANMELDUNG

(11) **EP 1 763 168 A1**
(43) Veröffentlichungstag der Anmeldung: **14.03.2007**
(21) Anmeldenummer: 06118471.9
(22) Anmeldetag: 04.08.2006
(51) Int. Cl.: H04L 1/00, H03M 13/09

(54) **Verfahren zum Erzeugen von Datentelegrammen, die CRC-Sicherungsanhänge aufweisen, welche eine verringerte Restfehlerwahrscheinlichkeit bieten**

(30) Priorität: 12.09.2005 DE 102005043311
(71) Anmelder: SIEMENS AKTIENGESELLSCHAFT, 80333 München (DE)
(72) Erfinder: Hüttinger, Simon, 91056, Erlangen (DE); Haller, Herbert, 92260, Fichtenhof (DE); Krämer, Werner, 92421, Schwandorf (DE); Weichhold, Peter, 90574, Rosstal (DE); Wolski, Jürgen, 91239, Henfenfeld (DE)

(57) **Zusammenfassung**

Bei vorgegebener Restfehlerwahrscheinlichkeit müssen CRC-Sicherungsanhänge in Datentelegrammen umso länger sein, je geringer diese Restfehlerwahrscheinlichkeit vorgegeben ist. Der Implementierungsaufwand (Rechenaufwand, oder Zahl der verwendeten Speicher) steigt hier bei exponentiell mit der Länge des CRC-Sicherungsanhangs.

Bei dem erfindungsgemäßen Verfahren werden hingegen (mindestens) zwei CRC-Sicherungsanhänge (CRC 1 und CRC 2) erzeugt, die gemeinsam an das Datentelegramm angehängt werden. Der Aufwand ist hierbei nur doppelt so hoch wie bei einem der CRC-Sicherungsanhänge, so dass ein verlängerter Sicherungsanhang erzeugt werden kann, ohne dass sich der exponentielle Aufwand ergibt. Bei Verwendung desselben Codes für die Erzeugung des ersten und des zweiten CRC-Sicherungsanhangs ist eine Umordnung der Daten erforderlich. Die beiden Sicherungsanhänge können unabhängig voneinander oder seriell (d. h. aufeinander aufbauend) erzeugt werden.

## Beschreibung

Die Erfindung betrifft ein Verfahren zum Erzeugen von Datentelegrammen, die CRC-Sicherungsanhänge aufweisen, welche eine verringerte Restfehlerwahrscheinlichkeit bieten.

Für die digitale Kommunikation ist es äußerst wichtig, zwischen gültigen und ungültigen Telegrammen unterscheiden zu können. Ungültig sind hierbei fehlerbehaftete Telegramme. Um fehlerhafte Übertragungen erkennen zu können, wird in vielen Systemen ein Sicherungsanhang, der von einem Fehlererkennungscodierer erzeugt wird, zusammen mit den Nutzdaten übertragen. Der Empfänger eines Telegramms bildet aus dem eigentlichen Dateninhalt erneut den Sicherungsanhang auf dieselbe Weise, wie dies bereits im Sender erfolgt ist. Ein Vergleich des empfangenen Sicherungsanhangs mit dem im Empfänger berechneten ergibt dann, ob eine Verfälschung der Daten stattgefunden hat.

Zu den standardmäßig verwendeten Sicherungsanhängen gehören die CRC-Sicherungsanhänge (CRC bedeutet "Cyclic Redundancy Checks"). Ein bei vielen Internetprotokollen verwendeter CCITT-Standard-CRC ist ein CRC vom Grade 16 (Länge 16), wobei dadurch ein Sicherungsanhang von 16 Bit erzeugt wird.

Die CRC-Sicherungsanhänge sind durch einen Code definiert. Dem Code ist ein Generatorpolynom zugeordnet. Physikalisch entspricht das Generatorpolynom einem Schieberegister in der Datenverarbeitungseinrichtung, wobei dem Schieberegister auf bestimmte Art und Weise Speicherregister zugeordnet sind.

Es können sich bei einer Datenübertragung mehrere Fehler ausgleichen. Es gibt daher stets eine so genannte Restfehlerwahrscheinlichkeit, d. h. eine Wahrscheinlichkeit dafür, dass ein an sich ungültiges Telegramm, welches also fehlerbehaftet ist, für gültig gehalten wird.

Zur Verringerung der Restfehlerwahrscheinlichkeit kann man einfach die Länge des Sicherungsanhangs erhöhen.

Bisher steigt der Implementierungsaufwand für die Berechnung des Sicherungsanhangs exponentiell mit der Länge des Sicherungsanhangs an. Es steigt einerseits die Zahl der arithmetischen Operationen. Zur Umsetzung des exponentiellen Implementierungsaufwands ist es auch möglich, anstelle von arithmetischen Operationen Tabellen zu verwenden. Es steigt somit entweder der Zeitaufwand für die Berechnung oder der in die Hardware investierte Aufwand, oder beides.

Es ist Aufgabe der Erfindung, ein Verfahren zum Erzeugen von Datentelegrammen, die CRC-Sicherungsanhänge aufweisen, welche eine verringerte Restfehlerwahrscheinlichkeit bieten, bereitzustellen, das die oben genannten Nachteile nicht aufweist.

Erfindungsgemäß wird zu Daten eines Datentelegramms ein erster CRC-Sicherungsanhang und ein zweiter CRC-Sicherungsanhang gebildet, wobei an das Datentelegramm beide CRC-Sicherungsanhänge zur Bildung eines Sicherungsanhangs mit verringerter Restfehlerwahrscheinlichkeit angehängt werden.

Anstelle also mit Polynomen höheren Grades zu rechnen, kann zweimal ein Polynom geringeren Grades verwendet werden, d. h. ein einfacherer Code. Dadurch bleibt der Rechenaufwand für den verbesserten Sicherungsanhang größenordnungsmäßig gleich: Er steigt linear mit der Länge des Sicherungsanhangs. Versuche haben ergeben, dass ein aus zwei Teilen gebildeter CRC-Sicherungsanhang eine Restfehlerwahrscheinlichkeit bietet, die den im Stand der Technik gebildeten längeren Sicherungsanhängen, welche als Ganzes einzeln berechnet wurden, nicht nachsteht.

Bei einer Alternative der Erfindung werden der erste und der zweite CRC-Sicherungsanhang mit Hilfe desselben Codes gebildet. Um zu vermeiden, dass sich zweimal derselbe Sicherungsanhang ergibt, werden hierbei jedoch die Daten umgeordnet, und zwar in vorbestimmter Weise. Dies ist die Technik des so genannten "Interleavings".

Bei dieser Alternative der Verwendung ein und desselben Codes für beide CRC-Sicherungsanhänge gibt es eine Ausführungsform, bei der der erste und der zweite CRC-Sicherungsanhang unabhängig voneinander (parallel) gebildet werden. Hierbei kann insbesondere zwei identisch gebaute Schieberegister zur Umsetzung des Codes bereitgestellt sein, so dass beide CRC-Sicherungsanhänge quasi zeitgleich berechenbar sind.

Als Variante bei der vorliegenden Alternative der Verwendung derselben Codes für beide CRC-Sicherungsanhänge ist eine serielle Berechnung der beiden CRC-Sicherungsanhänge vorgesehen. Hierbei wird dann der erste CRC-Sicherungsanhang bei der Berechnung des zweiten CRC-Sicherungsanhangs einbezogen. Mit anderen Worten ist bei der Umordnung der Daten bereits der erste CRC-Sicherungsanhang angehängt und wird ebenfalls mit den Daten zusammen umgeordnet, bevorzugt unter Aufrechterhaltung eines gesonderten Datenpakets für den Sicherungsanhang, und der zweite CRC-Sicherungsanhang wird aus der umgeordneten Gesamtheit aus Daten und erstem Sicherungsanhang gebildet.

Bei einer zweiten Alternative werden der erste und der zweite CRC-Sicherungsanhang mit Hilfe verschiedener Codes gebildet. Hierzu sind naturgemäß zwei verschieden aufgebaute Schieberegister bei der physikalischen Implementierung erforderlich.

Bevorzugt sind der erste und der zweite CRC-Sicherungsanhang gleich lang. Es hat sich als vorteilhaft herausgestellt, wenn sowohl die eigentlichen Daten des Datentelegramms als auch die Sicherungsanhänge in Datenpaketen gleicher Länge gebildet sind.

Abermals gibt es die Variante, dass der erste und der zweite Sicherungsanhang unabhängig voneinander (parallel) gebildet werden. Hierbei ist eine Umordnung der Daten wie oben beschreiben nun nicht mehr erforderlich, weil zwei verschiedene Codes verwendet werden.

Auch hier ist die andere Variante möglich, dass der erste CRC-Sicherungsanhang zeitlich vor dem zweiten CRC-Sicherungsanhang gebildet wird, und dass er an die Daten des Datentelegramms angehängt wird, wobei der zweite CRC-Sicherungsanhang aus der Gesamtheit aus Daten und erstem Sicherungsanhang gebildet wird.

Es wurden oben zwei verschiedene Alternativen (gleiche Codes, verschiedene Codes) mit je zwei verschiedenen Varianten (unabhängige, also parallele Berechnung der CRC-Sicherungsanhänge und serielle Berechnung der beiden CRC-Sicherungsanhänge, wobei bei der seriellen Berechnung der erste Sicherungsanhang bei der Berechnung des zweiten Sicherungsanhangs einbezogen wird) vorgestellt.

Die erste Alternative hat gegenüber der zweiten Alternative den Vorteil, dass bei der Verwendung derselben Codes für die Berechnung der beiden CRC-Sicherungsanhänge die Gesamtsituation vereinfacht ist. Zwei unterschiedliche Codes komplizieren das Gesamtverfahren. Die Verwendung von zwei unterschiedlichen Codes hat jedoch den Vorteil, dass auf die Umordnung der Daten verzichtet werden kann, bei der eine gewisse Anzahl von Schiebeoperationen oder Tabellenzugriffe benötigt werden, die eingespart werden können.

Die parallelen Varianten des erfindungsgemäßen Verfahrens, bei denen der erste und der zweite CRC-Sicherungsanhang unabhängig voneinander gebildet werden, eignen insbesondere dazu, die beiden CRC-Sicherungsanhänge gleichzeitig zu berechnen. Wegen der Unabhängigkeit jeder Berechnung von den anderen Berechnungen ist dies ohne weiteres möglich.

Bei einer weiteren bevorzugten Ausführungsform werden mehr als zwei CRC-Sicherungsanhänge gebildet und an das Datentelegramm angehängt.

Sämtliche oben beschriebenen Alternativen und Varianten lassen sich auch mit drei oder mehr CRC-Sicherungsanhängen durchführen. Die CRC-Sicherungsanhänge können insbesondere abermals parallel, also unabhängig voneinander, gebildet werden, oder sie können gestaffelt aufeinander aufbauend seriell gebildet sein. Es sind auch Mischformen denkbar, in denen etwa die ersten beiden CRC-Sicherungsanhänge parallel gebildet sind und der dritte seriell auf diesen beiden aufbauend gebildet ist.

Die Erfindung liefert somit eine CRC-Bildungsvorschrift, bei der der Implementierungsaufwand nicht exponentiell, sondern nur linear mit der Länge des Sicherungsanhangs wächst. Insbesondere die Leistungsfähigkeit der seriellen Varianten steigt schnell, wenn die Anzahl der CRC-Sicherungsanhänge erhöht wird.

Bei Vorgabe einer bestimmten Restfehlerwahrscheinlichkeit kann also die Gesamtlänge des zu berechnenden CRC-Sicherungsanhangs in einem ersten Schritt ermittelt werden, dann kann diese Gesamtlänge in Teillängen aufgeteilt werden, und es können entsprechende Codes zur Berechnung von CRC-Sicherungsanhängen, die jeweils so lang sind wie die Teillängen, zugeordnet werden.

Es werden nun bevorzugte Ausführungsformen der Erfindung unter Bezug auf die Zeichnung beschrieben, in der:
- FIG 1: den Zusammenhang zwischen Restfehlerwahrscheinlichkeit und CRC-Sicherungsanhangslänge im Stand der Technik darstellt;
- FIG 2: die Schritte einer ersten Variante des erfindungsgemäßen Verfahrens zeigt;
- FIG 3: die Schritte einer zweiten Variante des erfindungsgemäßen Verfahrens zeigt;
- FIG 4: die Schritte einer dritten Variante des erfindungsgemäßen Verfahrens zeigt; und
- FIG 5: die Schritte einer vierten Variante des erfindungsgemäßen Verfahrens zeigt.

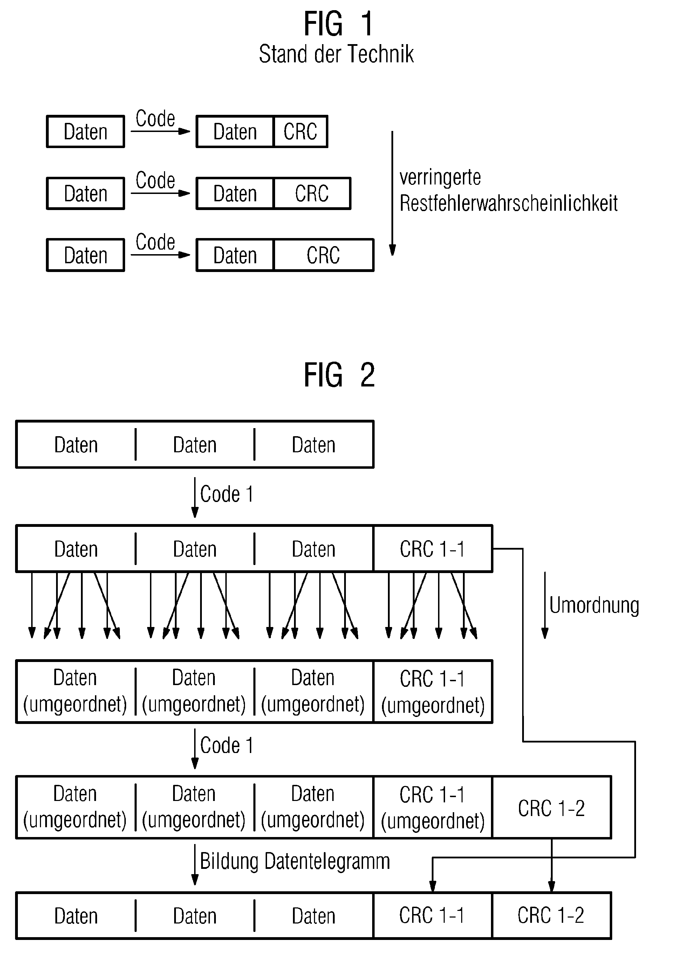

In FIG 1 ist symbolhaft dargestellt, wie ein mit "Daten" bezeichnetes Datenpaket einem Code unterworfen wird, so dass ein CRC-Sicherungsanhang erzeugt wird. Je nach der gewünschten Restfehlerwahrscheinlichkeit ist der Code aufwendiger und hat einen höheren Grad. Entsprechend verlängert sich die Länge des CRC-Sicherungsanhangs bei gewünschter Verringerung der Restfehlerwahrscheinlichkeit.

Die im Folgenden beschriebene Variante der Erfindung verwendet eine serielle Verkettung von Sicherungs-Anhängen und gleichzeitig eine Datenumordnung.

Ein in FIG 2 aus drei Datenblöcken bestehend gezeigtes Datenpaket soll einen CRC-Sicherungsanhang erhalten. Die Restfehlerwahrscheinlichkeit hierbei soll besonders gering sein.

Anstatt, wie nun im Stand der Technik, den Code zu verkomplizieren, wird bei der Erfindung ein herkömmlicher Code 1 verwendet, um zusätzlich zu dem Datenpaket einen Datenblock CRC 1-1 zu erzeugen, d. h. einen ersten Sicherungsanhang. Dieser hat die gleiche Länge wie die Datenblöcke aus den Daten.

Im nächsten in FIG 2 dargestellten Schritt erfolgt nun eine Umordnung in vorbestimmter Weise. Dies ist nichts anderes, als das unter dem Begriff "Interleaving" bekannte Vorgehen. Man erhält die drei Datenblöcke in umgeordneter Form sowie zusätzlich den ersten CRC-Sicherungsanhang CRC 1-1 in umgeordneter Form. Die Umordnung erfolgt wie hier dargestellt vorzugsweise datenblockweise, so dass die Datenblöcke noch zu trennen sind.

Die Gesamtheit aus umgeordneten Daten und umgeordnetem CRC-Sicherungsanhang CRC 1-1 wird abermals der Codeberechnung mit dem Code 1 unterworfen.

Naturgemäß erhält man nochmals einen weiteren Datenblock CRC 1-2 als zweiten CRC-Sicherungsanhang.

Das Datentelegramm, was nun übersendet wird, enthält die drei Datenblöcke sowie den ersten Sicherungsanhang CRC 1-1 und den zweiten Sicherungsanhang CRC 1-2. Gezeigt ist hierbei in FIG 2, dass der Datenblock CRC 1-1 in seiner nicht umgeordneten Variante übermittelt wird. Die Erfindung ist hierauf jedoch nicht einzuschränken. Der Datenblock CRC 1-1 könnte auch in seiner umgeordneten Variante in dem Datentelegramm vorgesehen sein.

Gegenüber dem Vorsehen eines einzigen Sicherungsanhangs CRC 1-1 mit dem Code 1 ist die Restfehlerwahrscheinlichkeit bei dem sich in FIG 2 ergebenden Datentelegramm stark verringert. Gegenüber der Berechnung eines doppelt so langen CRC-Sicherungsanhangs durch einen einzelnen Codierungsschritt wurde jedoch erheblich viel Rechenzeit eingespart.

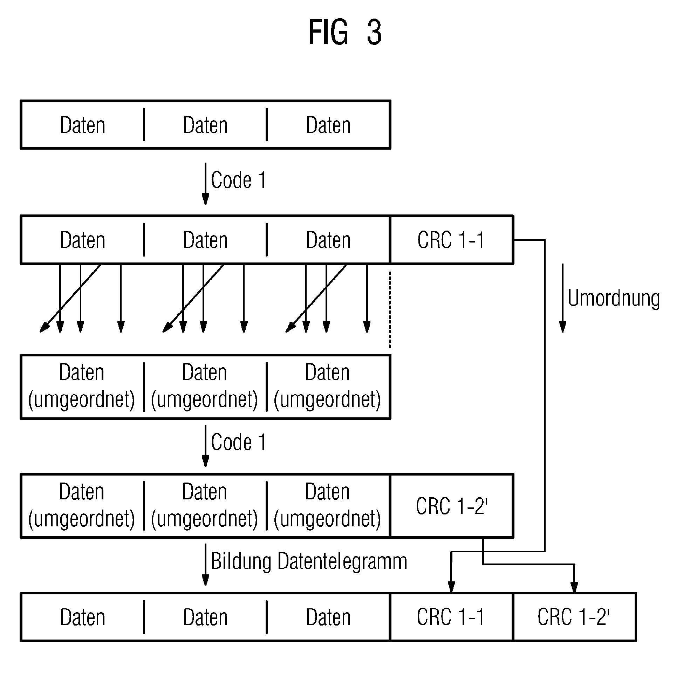

Eine zweite Variante des erfindungsgemäßen Verfahrens wird nun unter Bezug auf FIG 3 beschrieben. Bei dieser Variante wird eine parallele Verkettung der CRC-Sicherungsanhänge unter gleichzeitiger Umordnung der Daten verwendet.

Abermals wird von einem Datenpaket ausgegangen, das hier als aus drei Blöcken bestehend dargestellt ist. Bei der zweiten Variante wird dieses Datenpaket ebenfalls dem Code 1 unterworfen. Man erhält abermals ein Datenpaket mit einem Sicherungsanhang CRC 1-1.

Nachfolgend werden auch hier die Daten umgeordnet. Bei der vorliegenden zweiten Variante wird jedoch nicht der erste CRC-Sicherungsanhang CRC 1-1 mit umgeordnet, sondern wird virtuell abgetrennt und für später gespeichert. Die umgeordneten Daten werden nun abermals dem Code 1 unterzogen. Man erhält den Datenblock zusammen mit einem Sicherungsanhang CRC 1-2'. Der Sicherungsanhang CRC 1-2' unterscheidet sich naturgemäß in der Regel von dem in FIG 2 gezeigten Sicherungsanhang CRC 1-2, in den der erste CRC-Sicherungsanhang mit eingeht.

Die beiden unabhängig voneinander erzeugten Sicherungsanhänge werden nun (in an sich beliebiger Reihenfolge) an das Datenpaket angehängt. In FIG 3 gezeigt ist das Datenpaket aus den drei Blöcken mit zwei gleich langen Blöcken aus CRC-Sicherungsanhängen, nämlich dem ersten CRC-Sicherungsanhang CRC 1-1 und dem zweiten CRC-Sicherungsanhang CRC 1-2'.

Bei den beiden unter Bezug auf FIG 2 und FIG 3 beschriebenen Varianten war eine Umordnung zumindest der Daten erforderlich, weil jedes Mal dasselbe Schieberegister oder ein gleichgebautes Schieberegister verwendet wurde, also dieselbe Codierung verwendet wurde.

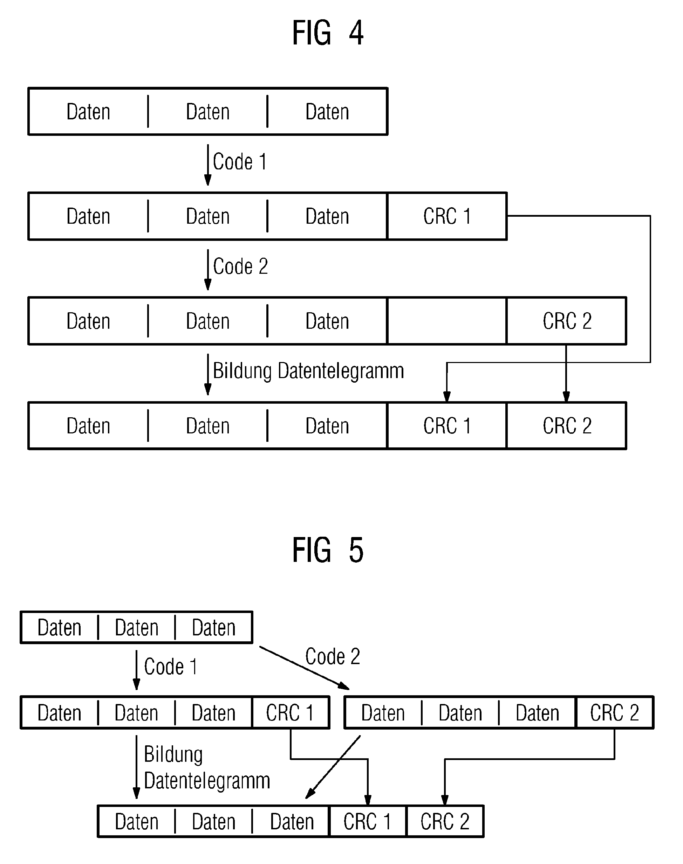

Die beiden folgenden Varianten, Variante 3, welche unter Bezug auf FIG 4 beschrieben wird, und Variante 4, welche unter Bezug auf FIG 5 beschrieben wird, machen von zwei unterschiedlichen Schieberegistern Gebrauch, die zwei verschiedene Codes implementieren.

Entsprechend kann eine Umordnung der Daten entfallen.

Somit wird ein Datenpaket, welches in FIG 4 aus drei Blöcken bestehend dargestellt ist, einem Codierungsschritt mit dem Code 1 unterzogen, so dass ein erster CRC-Sicherungsanhang CRC 1 gebildet wird. Anschließend wird die Gesamtheit aus dem Datenpaket und dem CRC-Sicherungsanhang CRC 1 einem zweiten Codierungsschritt mit einem zweiten, sich von dem Code 1 unterscheidenden Code 2 unterzogen. Man erhält das Datenpaket aus vier Datenblöcken zusammen mit einem zweiten CRC-Sicherungsanhang CRC 2.

An sich enthält dieses Datenpaket bereits den ersten Sicherheitsanhang CRC 1 an geeigneter Stelle. Zu späteren Zeitpunkten kann das Datentelegramm in geeigneter Weise neu gebildet werden, in dem die drei Datenblöcke des Datenpakets, nachfolgend der erste CRC-Sicherungsanhang CRC 1 und der zweite CRC-Sicherungsanhang CRC 2 zusammengesetzt werden.

Bei der in FIG 5 dargestellten Variante, welche eine parallele Verkettung unterschiedlicher Codes verwendet, wird unabhängig voneinander das Datenpaket einem Codierungsschritt mit dem Code 1 und einem Codierungsschritt mit dem Code 2 unterworfen. Bei dem einen Codierungsschritt erhält man an das Datenpaket angehängt einen ersten CRC-Sicherungsanhang CRC 1, und bei dem anderen Codierungsschritt erhält man an das Datenpaket angehängt einen zweiten CRC-Sicherungsanhang CRC 2.

Die beiden unabhängig voneinander gewonnenen CRC-Sicherungsanhänge CRC 1 und CRC 2 können zur Bildung des Datentelegramms nacheinander an das Datenpaket angehängt werden.

In den Figuren sind jeweils Ausführungsformen des erfindungsgemäßen Verfahrens gezeigt, bei denen ein erster CRC-Sicherungsanhang und ein zweiter CRC-Sicherungsanhang an ein aus drei Blöcken bestehendes Datenpaket angehängt werden. Die Erfindung ist nicht auf die Verwendung von nur zwei CRC-Sicherungsanhängen beschränkt, sondern es sind auch Versionen denkbar, in denen drei oder mehr CRC-Sicherungsanhänge erzeugt und angehängt werden. Es hat sich als vorteilhaft erwiesen, wenn die CRC-Sicherungsanhänge genauso groß sind wie blockweise Strukturen in den Daten. Die Erfindung ist jedoch nicht auf solche Ausführungsformen beschränkt. Auch bei der in FIG 2 veranschaulichten Umordnung der Daten zusammen mit dem CRC-Sicherungsanhang CRC 1-1 muss nicht notwendigerweise eine Umordnung blockweise erfolgen.

In der Praxis wird sich aufgrund der Definition einer Restfehlerwahrscheinlichkeit durch die Vorgaben eine Mindestlänge für den CRC-Sicherungsanhang ergeben. Diese Mindestlänge kann man dann in entsprechende Blöcke unterteilen. Sollte diese Länge nicht perfekt in mehrere Blöcke unterteilbar sein, so ist im Zweifel eher ein Block mehr als ein Block weniger zu verwenden. Da die Berechnung der Teil-CRC-Sicherungsanhang nur linear mit ihrer Anzahl steigt, ist es im Zweifel der Gewährleistung der vorgegebenen verringerten Restfehlerwahrscheinlichkeit dienlich, wenn zuviel Sicherungsanhang bereitgestellt wird, als wenn zuwenig bereitgestellt wird.

Auch hierbei ist die Erfindung nicht auf eine Verwendung von Datenblöcken gleicher Länge beschränkt. Auch die CRC-Sicherungsanhänge untereinander, welche gemeinsam an das Datentelegramm angehängt werden, können theoretisch verschiedene Längen haben. Dann sind naturgemäß nur die Ausführungsformen gemäß FIG 4 und FIG 5 zur Umsetzung des erfindungsgemäßen Verfahrens möglich.

## Patentansprüche

1. Verfahren zum Erzeugen von Datentelegrammen, die CRC-Sicherungsanhänge aufweisen, welche eine verringerte Restfehlerwahrscheinlichkeit bieten,
**dadurch gekennzeichnet, dass**
zu Daten eines Datentelegramms
- ein erster CRC-Sicherungsanhang (CRC 1-1; CRC 1) und ein zweiter CRC-Sicherungsanhang (CRC 1-2, CRC 1-2'; CRC 2) gebildet werden und dass
- der erste CRC-Sicherungsanhang und der zweite CRC-Sicherungsanhang beide an das Datentelegramm zur Bildung eines Datentelegramms mit Sicherungsanhang mit verringerter Restfehlerwahrscheinlichkeit angehängt werden.

2. Verfahren nach Anspruch 1,
**dadurch gekennzeichnet, dass**
der erste und zweite CRC-Sicherungsanhang mit Hilfe desselben Codes gebildet werden, dass aber die Daten des Datentelegramms, aus denen der erste CRC-Sicherungsanhang gebildet wird, vor Bildung des zweiten CRC-Sicherungsanhangs in vorbestimmter Weise umgeordnet werden und der zweite CRC-Sicherungsanhang aufgrund der umgeordneten Daten gebildet wird.

3. Verfahren nach Anspruch 2,
**dadurch gekennzeichnet, dass**
der erste und der zweite CRC-Sicherungsanhang unabhängig voneinander gebildet werden.

4. Verfahren nach Anspruch 2,
**dadurch gekennzeichnet, dass**
bei der Umordnung der Daten bereits der erste CRC-Sicherungsanhang (CRC 1-1) angehängt ist und ebenfalls umgeordnet wird, wobei der zweite CRC-Sicherungsanhang (CRC 1-2) aus der umgeordneten Gesamtheit aus Daten und erstem Sicherungsanhang (CRC 1-1) gebildet wird.

5. Verfahren nach einem der Ansprüche 2 bis 4,
**dadurch gekennzeichnet, dass**
die Daten des Datentelegramms blockweise, vorzugsweise in Blöcken der Länge des ersten CRC-Sicherungsanhangs, umgeordnet werden.

6. Verfahren nach Anspruch 1,
**dadurch gekennzeichnet, dass**
der erste und der zweite CRC-Sicherungsanhang (CRC 1, CRC 2) mit Hilfe zweier verschiedener Codes gebildet werden.

7. Verfahren nach Anspruch 6,
**dadurch gekennzeichnet, dass**
der erste und der zweite CRC-Sicherungsanhang gleich lang sind.

8. Verfahren nach Anspruch 6 oder 7,
**dadurch gekennzeichnet, dass**
der erste und der zweite CRC-Sicherungsanhang unabhängig voneinander gebildet werden.

9. Verfahren nach Anspruch 6 oder 7,
**dadurch gekennzeichnet, dass**
der erste CRC-Sicherungsanhang (CRC 1) zeitlich vor dem zweiten CRC-Sicherungsanhang (CRC 2) gebildet wird, und dass er an die Daten des Datentelegramms angehängt wird, wobei der zweite CRC-Sicherungsanhang aus der Gesamtheit aus Daten und erstem Sicherungsanhang gebildet wird.

10. Verfahren nach einem der vorhergehenden Ansprüche,
**dadurch gekennzeichnet, dass**
mehr als zwei CRC-Sicherungsanhänge gebildet und an das Datentelegramm angehängt werden.
